# EUROPÄISCHE PATENTANMELDUNG

(11) **EP 2 541 096 A1**
(43) Veröffentlichungstag der Anmeldung: **02.01.2013**
(21) Anmeldenummer: 11172095.9
(22) Anmeldetag: 30.06.2011
(51) Int. Cl.: F16H 1/46, F03D 11/02

(54) **Antriebssystem für eine Windkraftanlage**

(71) Anmelder: SIEMENS AKTIENGESELLSCHAFT, 80333 München (DE)
(72) Erfinder: Reimers, Jan-Dirk, 52074 Aachen (DE); Dinter, Ralf Martin, 45888 Gelsenkirchen (DE); Klein-Hitpass, Arno, 52074 Aachen (DE)

(57) **Zusammenfassung**

Ein Antriebssystem für eine Windkraftanlage weist eine zumindest eine Planetenradstufe, die ein Hohlrad, mehrere Planetenräder, einen Planetenträger und ein Sonnenrad aufweist, umfassende Getriebeeinheit auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebeeinheit verbundene Motor- oder Generatoreinheit sind von einem Getriebegehäuse umgeben. Außerdem umfaßt die Motor- oder Generatoreinheit einen drehfest mit einer Rotorhohlwelle verbundenen Rotor. Ein motor- oder generatorseitiger Endabschnitt der zweiten Welle der Getriebeeinheit ist von der Rotorhohlwelle konzentrisch umgeben und mit dieser über eine innerhalb der Rotorhohlwelle angeordnete Kupplung oder Spannverbindung verbunden. Zwischen Getriebeeinheit und Motor- oder Generatoreinheit ist ein Getriebegehäusestutzen angeordnet, der einen getriebeseitigen Endabschnitt der Rotorhohlwelle konzentrisch umgibt und einen Lagersitz für eine der Rotorhohlwelle zugeordnete Lageranordnung bildet. Mittels dieser Lageranordnung ist auch die zweite Welle der Getriebe-einheit gelagert.

## Beschreibung

Ein Großmaschinenantriebstrang für Windkraftanlagen oder Mühlen umfaßt üblicherweise Systemkomponenten, wie Netzanbindungselemente, Motoren bzw. Generatoren, Kupplungen, Getriebe und Antriebswellen. Netzseitig sind vielfach Umrichter vorgesehen. Bremsen sind oft in Form von mechanischen Bremsen an schnellaufenden Welle zwischen Getriebe und Motor bzw. Generator vorgesehen, da dort Bremsmomente übersetzungsbedingt kleiner sind.

Aus EP 2 031 273 A2 ist eine Generator-Getriebe-Einheit bekannt, bei der ein Rotor des Generators mittels einer zwischen einer inneren Rotorhohlwelle und einem Gehäusestutzen vorgesehenen Lageranordnung gelagert ist. Spulen- bzw. Magnetanordnungen des Rotors umgeben den Gehäusestutzen radial. Zwischen der inneren Rotorhohlwelle und einer Sonnenwelle ist eine Kupplung vorgesehen. Die Sonnenwelle verfügt über keine eigenen Lager, sondern ist über die Lageranordnung des Rotors gelagert.

EP 1 045 139 A2 offenbart eine Windkraftanlage mit einem Rotor, dessen Rotornabe in einem auf einem Rotorträger angeordneten Wälzlager gelagert und mit einem zweistufigen, eine Antriebsstufe und eine Abtriebsstufe aufweisenden Planetengetriebe verbunden ist. Eine Ausgangswelle der Planetenstufe ist über eine Kupplung an einen Generator gekoppelt. Ein Innenring des Wälzlagers ist mit der Rotornabe und rotierenden Teilen des Planetengetriebes lösbar verbunden. Darüber hinaus ist ein Gehäuse des Generators mit dem Planetengetriebe lösbar zu einem Triebstrangmodul verbunden. Das Triebstrangmodul ist auf dem Rotorträger abgestützt und dadurch dynamisch entkoppelt.

Aus der älteren europäischen Patentanmeldung mit dem Anmeldeaktenzeichen 10003558.3 ist eine Antriebsvorrichtung für eine Windkraftanlage bekannt, die mindestens 2 zumindest dreischenklige Trägerelemente zur Lagerung von zumindest 3 Ritzelwellen umfaßt. Die Ritzelwellen sind jeweils mittels an Eckpunkten der Trägerelemente angeordneten Ritzelwellenlagern gelagert. Die Ritzelwellenlager sind durch Lagersitzelemente an den Trägerelementen befestigt. Mindestens ein Trägerelement ist zusätzlich zur Lagerung einer mit einer Rotornabe verbindbaren Anschlußwelle ausgestaltet, die von diesem Trägerelement umgeben ist und deren Achse durch den Mittelpunkt des Trägerelements verläuft. Eine erste Getriebestufe der erfindungsgemäßen Antriebsvorrichtung weist ein außenverzahntes Zentralrad auf. Das Zentralrad ist auf der Anschlußwelle befestigt und kämmt mit zumindest 3 Ritzeln der ersten Getriebestufe, die an ersten Enden der Ritzelwellen angeordnet sind. An zweiten Enden der Ritzelwellen sind zumindest 3 Zahnräder einer zweiten Getriebestufe angeordnet, die mit einem Zentralritzel der zweiten Getriebestufe kämmen.

WO 2008/031694 A1 offenbart ein Mühlenantriebssystem mit einem unterhalb eines Mahltellers anordenbaren Getriebe. Das Getriebe umfaßt zumindest eine Planetenstufe und weist eine vertikale Wellenlage auf. In ein Gehäuse des Getriebes ist ein elektrischer Motor integriert, der an einen Schmierstoffversorgungskreislauf des Getriebes angeschlossen ist, dessen Rotor und Stator sich vertikal erstreckende Achsen aufweisen und dessen Kühlung mittels durch das Getriebe zirkulierenden Schmierstoffs erfolgt.

In EP 2 295 147 A1 ist ein Mühlenantriebssystem mit einem unterhalb eines Mahltellers anordenbaren Getriebe mit zumindest einer Planeten- bzw. Stirnradstufe sowie einem in ein Gehäuse des Getriebes integrierten elektrischen Motor beschrieben. Außerdem umfaßt das Mühlenantriebssystem einen Umrichter mit einer zugeordneten Regelungseinrichtung zur verzahnungsspielfreien Drehzahlregelung des Motors.

Aus der älteren europäischen Patentanmeldung mit dem Anmeldeaktenzeichen 11155822.7 ist ein Getriebemotor für ein Mühlenantriebssystem bekannt, das einen unterhalb oder seitlich eines Mahltellers anordenbares Getriebe mit zumindest einer Planeten- bzw. Stirnradstufe umfaßt, das eine vertikale oder horizontale Wellenlage aufweist. In ein Gehäuse des Getriebes ist ein elektrischer Motor integriert, dessen Rotor und Stator sich parallel zur Wellenlage des Getriebes erstreckende Achsen aufweisen. Ein oberer Lagerdeckel und ein unterer Lagerdeckel sind an gegenüberliegenden Stirnseiten an Rotor bzw. Stator montiert und umfassen Lagersitze für Rotorwellenlager. Zwischen dem unteren Lagerdeckel und einem Bodenteil des Gehäuses ist eine Auffangwanne für Kühlmittel gebildet. Zwischen einem Hohlrad des Getriebes und dem Gehäuse oder radial zwischen einer Rotorwelle und einem Rotorträger, an dem Rotorwicklungen bzw. Rotormagnete befestigt sind, ist ein Drehschwingungsdämpfer angeordnet, der einen Primärteil und einen drehelastisch mit dem Primärteil verbundenen Sekundärteil umfaßt.

In der älteren europäischen Patentanmeldung mit dem Anmeldeaktenzeichen 11002782.8 ist ein Antriebssystem für eine Windkraftanlage beschrieben, das eine zumindest eine Planetenradstufe, die ein Hohlrad, mehrere Planetenräder, einen Planetenträger und ein Sonnenrad aufweist, umfassende Getriebeeinheit aufweist. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebe-einheit verbundene Motor- oder Generatoreinheit sind von einem Getriebegehäuse umgeben, das eine kardanische umfangssymmetrische oder teilsymmetrische Aufhängung zur Verbindung mit einem tragenden Strukturelement der Windkraftanlage aufweist.

Der vorliegenden Erfindung liegt die Aufgabe zugrunde, ein kompaktes und einfach zu wartendes Antriebssystem für eine Windkraftanlage anzugeben.

Diese Aufgabe wird erfindungsgemäß durch ein Antriebssystem mit den in Anspruch 1 angegebenen Merkmalen gelöst. Vorteilhafte Weiterbildungen der vorliegenden Erfindung sind in den abhängigen Ansprüchen angegeben.

Das erfindungsgemäße Antriebssystem weist eine zumindest eine Planetenradstufe, die ein Hohlrad, mehrere Planetenräder, einen Planetenträger und ein Sonnenrad aufweist, umfassende Getriebeeinheit auf. Des weiteren ist eine der Getriebeeinheit zugeordnete erste Welle vorgesehen, die einen mit einer Arbeitsmaschinen- oder Rotorwelle verbindbaren Kupplungsflansch aufweist und über den Planetenträger gelagert ist. Die Getriebeeinheit und eine mit einer zweiten Welle der Getriebe-einheit verbundene Motor- oder Generatoreinheit sind von einem Getriebegehäuse umgeben. Außerdem umfaßt die Motor- oder Generatoreinheit einen drehfest mit einer Rotorhohlwelle verbundenen Rotor. Ein motor- oder generatorseitiger Endabschnitt der zweiten Welle der Getriebeeinheit ist von der Rotorhohlwelle konzentrisch umgeben und mit dieser über eine innerhalb der Rotorhohlwelle angeordnete Kupplung oder Spannverbindung verbunden. Zwischen Getriebeeinheit und Motor-oder Generatoreinheit ist ein Getriebegehäusestutzen angeordnet, der einen getriebeseitigen Endabschnitt der Rotorhohlwelle konzentrisch umgibt und einen Lagersitz für eine der Rotorhohlwelle zugeordnete Lageranordnung bildet. Mittels dieser Lageranordnung ist auch die zweite Welle der Getriebe-einheit gelagert. Das erfindungsgemäße Antriebssystem weist dadurch eine sehr kompakte Bauweise auf und ermöglicht eine montagefreundliche und gewichtsoptimierte Ausführung einer Generator/Motor-Getriebe-Einheit.

Vorzugsweise sind die Rotorhohlwelle und die zweite Welle der Getriebeeinheit im wesentlichen ausschließlich mittels der Lageranordnung am Getriebegehäusestutzen gelagert. Dies ermöglicht einen besonders kompakten und wartungsfreundlichen Aufbau.

Die Rotorhohlwelle kann mit der zweiten Welle der Getriebe-einheit beispielsweise durch eine Zahnkupplung mit Kurz- oder Bogenverzahnung verbunden sein. Alternativ dazu kann die Rotorhohlwelle mit der zweiten Welle der Getriebeeinheit durch einen Innenspannsatz verbunden sein. Der Innenspannsatz umfaßt dabei beispielsweise zumindest jeweils einen Außenring und einen Innenring, die zueinander korrespondierende konische Kontaktflächen aufweisen und mittels mehrerer sich axial erstreckender Spannschrauben gegeneinander verspannbar sind. Durch Verspannung des zumindest einen Außenrings und des zumindest einen Innenrings können entsprechend einer bevorzugten Ausgestaltung der vorliegenden Erfindung sowohl die zweite Welle der Getriebeeinheit und die Rotorhohlwelle als auch die Rotorhohlwelle und der Rotor der Motor- oder Generatoreinheit miteinander verbunden werden. Dies ergibt eine verbesserte Montagefreundlichkeit. Alternativ zu einer Zahnkupplung oder einem Innenspannsatz kann die Rotorhohlwelle mit der zweiten Welle der Getriebeeinheit durch einen Außenspannsatz verbunden sein.

Die Kupplung oder Spannverbindung und der Rotor der Motor-oder Generatoreinheit können beispielsweise axial aufeinander ausgerichtet sein und lediglich einen radialen Abstand zueinander aufweisen. Entsprechend einer vorteilhaften Weiterbildung der vorliegenden Erfindung ist die zweite Welle der Getriebeeinheit axial im wesentlichen zur Hälfte von der Rotorwohlwelle umgeben. Auf diese Weise kann die Lageranordnung der Rotorhohlwelle axial mittig zwischen der Kupplung oder Spannverbindung und einem drehfest mit der zweiten Welle der Getriebeeinheit verbundenen Sonnenrad angeordnet und Kraftflüsse gleichmäßig verteilt werden. Alternativ dazu kann die Kupplung oder Spannverbindung entsprechend einer anderen Ausgestaltung der vorliegenden Erfindung axial zwischen dem Rotor der Motor- oder Generatoreinheit und der Lageranordnung der Rotorhohlwelle angeordnet sein. Dies ermöglicht eine Wahl einer kurzen zweiten Welle der Getriebeeinheit und damit einen noch kompakteren Aufbau.

Entsprechend einer bevorzugten Weiterbildung der vorliegenden Erfindung umfaßt die Lageranordnung der Rotorhohlwelle am Getriebegehäusestutzen ein doppelreihiges Lager in X-Anordnung. Hierdurch kann die Rotorhohlwelle ohne Wellenmutter gefertigt werden, da die Rotorhohlwelle nicht zur Lagerspieleinstellung verwendet werden muß. Dies kann statt dessen über einen äußeren Lagerdeckel erfolgen.

Vorzugsweise ist der Getriebegehäusestutzen an einen zwischen Getriebeeinheit und Motor- oder Generatoreinheit angeordneten Gehäusezwischenflansch angeformt. Dabei kann der Gehäusezwischenflansch einen Lagersitz für ein motor- oder generatorseitiges Planetenträgerlager aufweisen. Außerdem können am Gehäusezwischenflansch insbesondere ein Statormantel der Motor- oder Generatoreinheit sowie ein Hohlrad einer motor-oder generatorseitigen Planetenradstufe montiert sein. Darüber hinaus kann der Gehäusezwischenflansch jeweils einen Flanschfortsatz aufweisen, an dem jeweils der Statormantel bzw. das Hohlrad der motor- oder generatorseitigen Planetenradstufe montiert ist. In vorteilhafter Weise sind beide Flanschfortsätze hinsichtlich ihrer Durchmesser derart abgestuft, daß sie in einer vergleichbaren Größenordnung liegen, wobei der Flanschfortsatz für den Statormantel der größere von beiden ist. Bei gewichtsoptimierter Bauform kann der Flanschfortsatz für das Hohlrad der motor- oder generatorseitigen Planetenradstufe innenliegend ausgerichtet und gegen den Gehäusezwischenflansch verschraubt sein. Entsprechend einer weiteren Ausgestaltung der vorliegenden Erfindung sind der dem Statormantel zugeordnete Flanschfortsatz und der dem Hohlrad zugeordnete Flanschfortsatz axial voneinander beabstandet.

Entsprechend einer besonders bevorzugten Weiterbildung der vorliegenden Erfindung ist der Kupplungsflansch mit der Arbeitsmaschinen- oder Rotorwelle elastisch verbindbar. Auf diese Weise ist eine kardanische Ankupplung einer Arbeitsmaschine oder Rotorwelle möglich, insbesondere mit Winkelversatz. Eine solche Ankupplung kann beispielsweise mittels elastischer Bolzen realisiert sein. Des weiteren weist vorteilhafterweise auch das Getriebegehäuse eine kardanische umfangssymmetrische oder teilsymmetrische Aufhängung zur Verbindung mit einem tragenden Strukturelement der Windkraftanlage auf. Das tragende Strukturelement kann beispielsweise ein Fundamentlager mit einer Anbindung an einen Rahmen oder eine Gondel der Windkraftanlage sein. Durch eine doppel- oder vollkardanische Aufhängung des Antriebssystems innerhalb des tragenden Strukturelements und durch eine kardanische Anbindung des Kupplungsflansches können lager- bzw. verzahnungsschädigende Einflüsse vermieden werden. Aufgrund von Hauptrahmenverformungen einer Windkraftanlage entstehende Verschiebungen in Fundamentauflagern, die entsprechend bisherigen Lösungen über eine Aufhängung eines Antriebstrangs in diesen eingekoppelt werden, führen somit nicht zu unerwünschten Zwangskräften, sondern werden durch die kardanische Aufhängung vermieden. Damit ist das Antriebssystem lediglich Torsionsbelastungen ausgesetzt.

Bei Verwendung des erfindungsgemäßen Antriebssystems in einer Windkraftanlage ist die Getriebeeinheit mit einer Generatoreinheit verbunden. Des weiteren ist die erste Welle der Getriebeeinheit in diesem Fall eine getriebeseitige Antriebswelle. Die zweite Welle der Generatoreinheit ist dagegen eine getriebeseitige Abtriebswelle. Der Kupplungsflansch der getriebeseitigen Antriebswelle ist bei Verwendung des erfindungsgemäßen Antriebssystems in einer Windkraftanlage mit einer Rotorwelle verbindbar.

Die vorliegende Erfindung wird nachfolgend an einem Ausführungsbeispiel anhand der Zeichnung näher erläutert. Es zeigt
- Figur 1: eine perspektivische Schnittdarstellung eines erfindungsgemäßen Antriebssystems für eine Windkraftanlage,
- Figur 2: eine Schnittdarstellung des in Figur 1 dargestellten Antriebssystems mit Getriebe- und Generatoreinheit,
- Figur 3: eine Schnittdarstellung einer Generatoreinheit eines Antriebssystems mit einer gegenüber Figur 2 veränderten Verbindung zwischen Getriebe- und Generatoreinheit,
- Figur 4: eine Schnittdarstellung eines Innenspannsatzes zur Verbindung der Getriebeeinheit mit der Generatoreinheit,
- Figur 5: eine Schnittdarstellung einer ersten Variante eines Gehäusezwischenflansches zwischen Getriebe- und Generatoreinheit,
- Figur 6: eine Schnittdarstellung einer zweiten Variante eines Gehäusezwischenflansches zwischen Getriebe- und Generatoreinheit,
- Figur 7: eine schematische Darstellung eines Antriebssystems für eine Windkraftanlage einschließlich Netzanbindung,
- Figur 8: eine Ringstütze zur vollkardanischen Aufhängung des Antriebssystems gemäß Figur 1 mit einer korrespondierenden zweiarmige Drehmomentstütze,
- Figur 9: zwei Ringsegmentstützen zur vollkardanischen Aufhängung des Antriebssystems gemäß Figur 1 mit korrespondierenden Drehmomentstützen,
- Figur 10: zwei Ringsegmentstützen in einer gegenüber Figur 9 abgewandelten Variante.

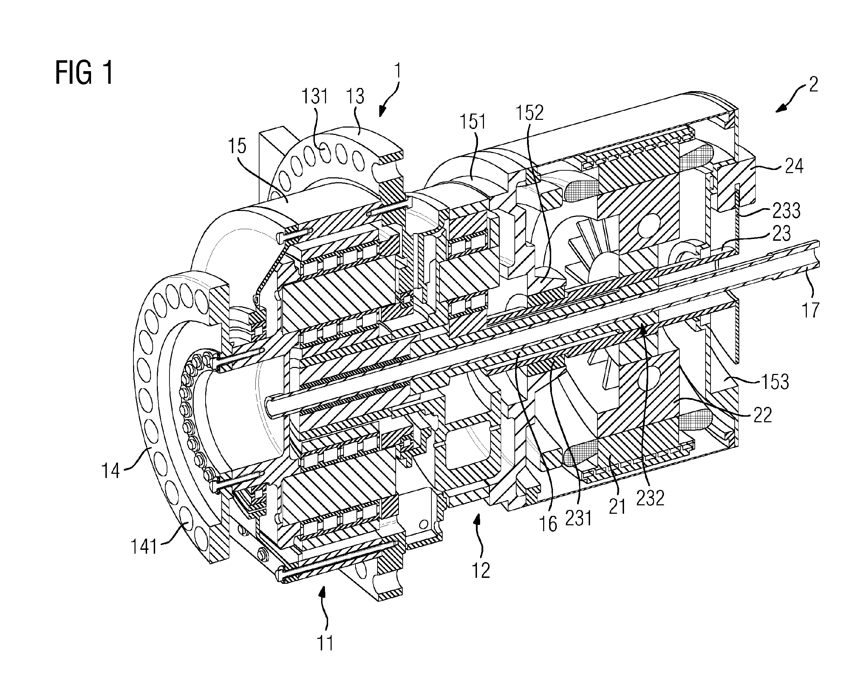

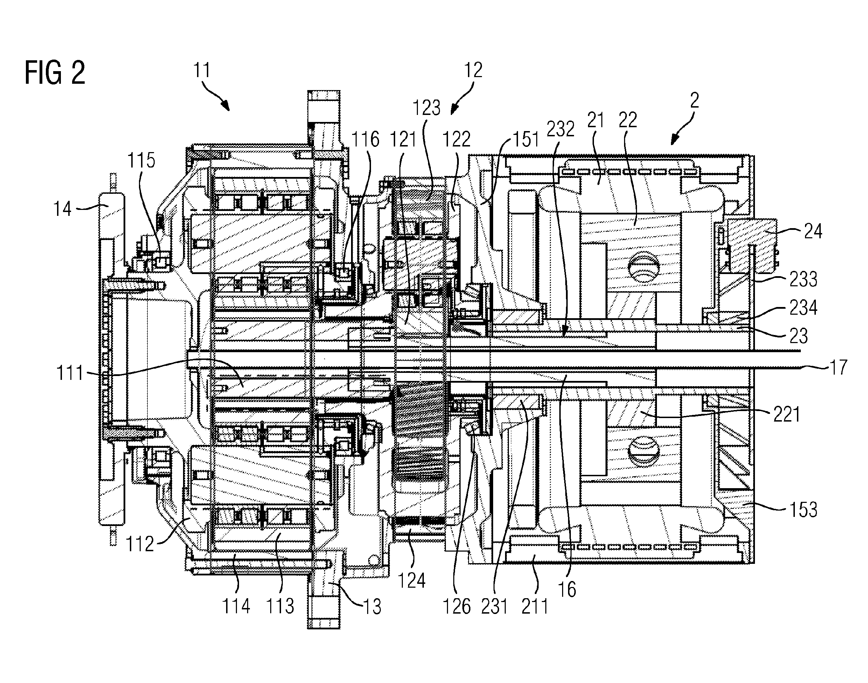

Das in Figur 1 dargestellte Antriebssystem für eine Windkraftanlage weist ein Getriebeeinheit 1 mit einer ersten 11 und zweite Planetenradstufe 12 in koaxialer Bauform auf. Wie auch der Schnittdarstellung gemäß Figur 2 zu entnehmen ist, umfaßt jede Planetenradstufe 11, 12 jeweils ein Hohlrad 114, 124, mehrere Planetenräder 113, 123, einen Planetenträger 112, 122 und ein Sonnenrad 111, 121. Die Getriebeeinheit 1 ist über eine Abtriebswelle 16 der Getriebeeinheit mit einer Generatoreinheit 2 verbunden und gemeinsam mit dieser in einem Getriebegehäuse 15 angeordnet. Der Getriebeeinheit 1 ist eine an den Planetenträger 112 der ersten Planetenradstufe 11 angeformte Antriebswelle zugeordnet, die einen mit einer Rotorwelle verbindbaren Kupplungsflansch 14 aufweist und über den Planetenträger 112 der ersten Planetenradstufe 11 gelagert ist. Dem Planetenträger 112 der ersten Planetenradstufe 11 sind zwei zwischen Planetenträgerwangen und Getriebegehäuse 15 angeordnete Lager 115 und 116 zugeordnet, die ein erstes und ein zweites Hauptlager der Getriebeeinheit 1 darstellen. In entsprechender Weise ist der Planetenträger 122 der zweiten Planetenradstufe 12 durch zwei zwischen Planetenträgerwangen und Getriebegehäuse 15 angeordnete Lager 125 und 126 gelagert.

Die Generatoreinheit 2 umfaßt einen Stator 21 und einen drehfest mit einer Rotorhohlwelle 23 verbundenen Rotor 22. Die Rotorhohlwelle 23 umgibt einen generatorseitigen Endabschnitt der Abtriebswelle 16 konzentrisch und ist mit diesem über eine innerhalb der Rotorhohlwelle 23 angeordnete Kupplung oder Spannverbindung 232 verbunden. Zwischen Getriebeeinheit 1 und Generatoreinheit 2 ist ein Getriebegehäusestutzen 152 angeordnet. Dieser Gehäusestutzen 152 umgibt einen getriebeseitigen Endabschnitt der Rotorhohlwelle 23 konzentrisch und bildet einen Lagersitz für eine der Rotorhohlwelle 23 zugeordnete Lageranordnung 231. Mittels dieser Lageranordnung 231 ist auch die Abtriebswelle 16 gelagert. Innerhalb der Abtriebswelle 16 und der Rotorhohlwelle 23 ist im vorliegenden Ausführungsbeispiel ein Pitch-Rohr 17 angeordnet, das sich axial über das gesamte Antriebssystem erstreckt.

Die Rotorhohlwelle 23 kann beispielsweise einen in Richtung Getriebeeinheit 1 stufenförmig wachsenden Außendurchmesser aufweisen. Damit die Rotorhohlwelle 23 auch in diesem Fall ohne Demontage des Rotors 22 der Generatoreinheit 2 ausgebaut werden kann, ist im vorliegenden Ausführungsbeispiel zwischen der Rotorhohlwelle 23 und dem Rotor 2 ein Innenspannsatz 221 vorgesehen. Der Innenspannsatz 221 weist dabei einen größeren Außendurchmesser als die Rotorhohlwelle 23 auf.

Vorteilhafterweise ist ein Außerdurchmesser des Sonnenrads 121 der zweiten Planetenradstufe 12 kleiner als ein Innendurchmesser der Rotorhohlwelle 23. Damit können die Abtriebswelle 16 und die Rotorhohlwelle 23 durch eine Öffnung an einem von der Getriebeeinheit 1 abgewandt angeordneten Gehäusedeckel 153 und durch eine zur Rotorachse konzentrische Öffnung am Rotor 2 eingesetzt werden.

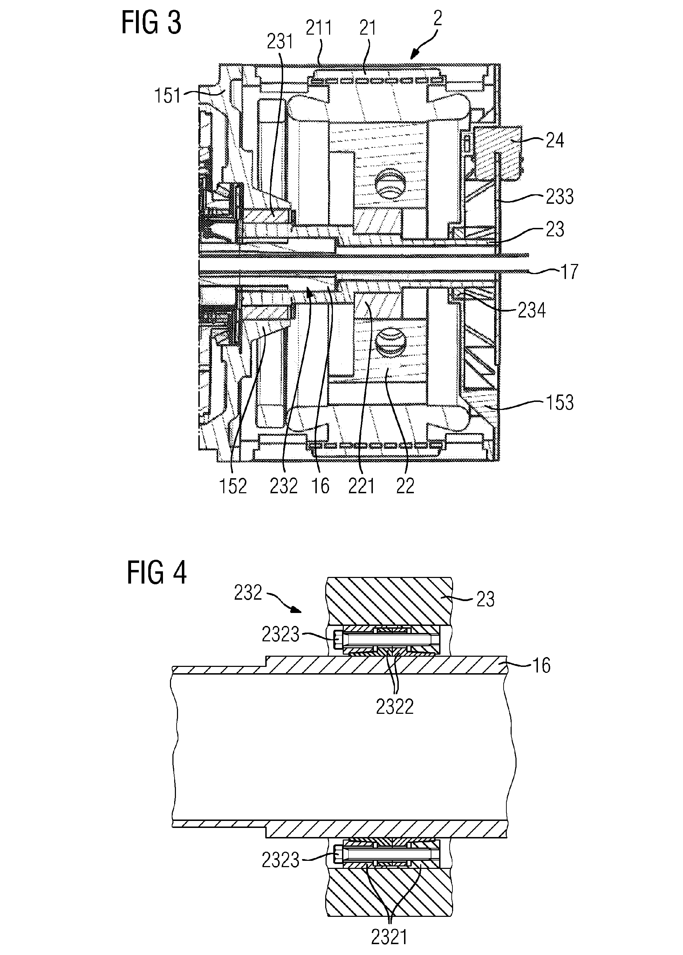

Entsprechend der Schnittdarstellung gemäß Figur 2 sind die Kupplung oder Spannverbindung 232 einerseits und der Rotor 22 der Generatoreinheit 2 axial aufeinander ausgerichtet und weisen lediglich einen radialen Abstand zueinander auf. Dabei ist die Abtriebswelle 16 der Getriebeeinheit 1 etwa zur Hälfte von Rotorwohlwelle umgeben. Die am Gehäusestutzen 152 angeordnete Lageranordnung 231 der Rotorhohlwelle 23 ist axial mittig zwischen der Kupplung oder Spannverbindung 232 einerseits und dem Sonnenrad 121 der zweiten Planetenradstufe 12 angeordnet. Alternativ zur in Figur 2 dargestellten Ausführungsform kann die Kupplung oder Spannverbindung 232 entsprechend Figur 3 auch axial zwischen dem Rotor 22 der Generatoreinheit 2 und der am Gehäusestutzen 152 angeordneten Lageranordnung 231 angeordnet sein. Dies ermöglicht eine besonders kompakte Bauform.

Die Lageranordnung 231 der Rotorhohlwelle 23 am Gehäusestutzen 152 umfaßt vorzugsweise ein doppelreihiges Lager in X-Anordnung. Darüber hinaus sind die Rotorhohlwelle 23 und die Abtriebswelle 16 der Getriebeeinheit 1 entsprechend einer besonders bevorzugten Ausführungsform ausschließlich mittels der Lageranordnung 231 am Gehäusestutzen 152 gelagert. Ein in den Figuren 1 bis 3 dargestelltes hinteres Rotorhohlwellenlager 234 an einer von der Getriebeeinheit 1 abgewandten Stirnseite der Generatoreinheit 2 ist also nicht zwingend erforderlich und kann grundsätzlich entfallen.

An der Rotorhohlwelle 23 ist im vorliegenden Ausführungsbeispiel an der von der Getriebeeinheit 1 abgewandten Stirnseite der Generatoreinheit 2 eine Bremsscheibe 233 drehfest montiert. Die Bremsscheibe 233 ist damit für Wartungszwecke einfach zugänglich. Ein der Bremsscheibe 233 zugeordneter Bremssattel 24 ist an dem von der Getriebeeinheit 1 abgewandt angeordneten Gehäusedeckel 153 befestigt.

Die Rotorhohlwelle 23 kann mit der Abtriebswelle 16 der Getriebeeinheit 1 durch eine Zahnkupplung mit Kurz- oder Bogenverzahnung verbunden sein. Alternativ dazu kann die Rotorhohlwelle 23 mit der Abtriebswelle 16 der Getriebeeinheit 1 auch durch einen in Figur 4 dargestellten Innenspannsatz 232 verbunden sein. Der Innenspannsatz 232 umfaßt im vorliegenden Ausführungsbeispiel zwei Außenringe 2321 und zwei Innenringe 2322, die zueinander korrespondierende konische Kontaktflächen aufweisen und mittels mehrerer sich axial erstreckender Spannschrauben 2323 gegeneinander verspannt werden können. Durch Verspannung der beiden Außenringe 2321 und der beiden Innenringe 2322 können entsprechend einer bevorzugten Ausführungsform sowohl die Abtriebswelle 16 der Getriebeeinheit 1 und die Rotorhohlwelle 23 als auch die Rotorhohlwelle 23 und der Rotor 22 der Generatoreinheit 2 miteinander verbunden werden, beispielsweise kraftschlüssig. Die Rotorhohlwelle 23 kann beispielsweise durch eine Verspannung der Außen- und Innenringe 2321, 2322 aufgeweitet werden. Dies führt dann zu einer kraftschlüssigen Verbindung zwischen Rotorhohlwelle 23 und Rotor 22. Der Rotor 22 der Generatoreinheit 2 kann beispielsweise auch mittels einer Paßfederverbindung, die axial auf den Innenspannsatz 232 ausgerichtet ist, mit der Rotorhohlwelle 23 verbunden werden.

Alternativ zu einer Zahnkupplung oder zu einem Innenspannsatz kann die Rotorhohlwelle 23 mit der Abtriebswelle 16 der Getriebeeinheit 1 durch einen Außenspannsatz verbunden sein. In diesem Fall ist der Rotor 22 beispielsweise an einen Flansch des Außenspannsatzes angeschraubt und über diesen mit der Rotorhohlwelle 23 verbunden. Vorteilhafterweise ist bei Verwendung eines Außenspannsatzes am motor- oder generatorseitigen Endabschnitt der zweiten Welle 16 der Getriebeeinheit 1 ein Flansch vorgesehen.

Der die Lageranordnung 231 der Rotorhohlwelle 23 konzentrisch umgebende Gehäusestutzen 152 ist im vorliegenden Ausführungsbeispiel an einen zwischen Getriebeeinheit 1 und Generatoreinheit 2 angeordneten Gehäusezwischenflansch 151 angeformt. Am Gehäusezwischenflansch 151 ist sowohl ein Statormantel 211 der Generatoreinheit 2 als auch das Hohlrad 124 der zweiten Planetenradstufe 12 montiert. Zusätzlich weist der Gehäusezwischenflansch 151 einen Lagersitz für ein generatorseitiges Planetenträgerlager 126 der zweiten Planetenradstufe 12 auf.

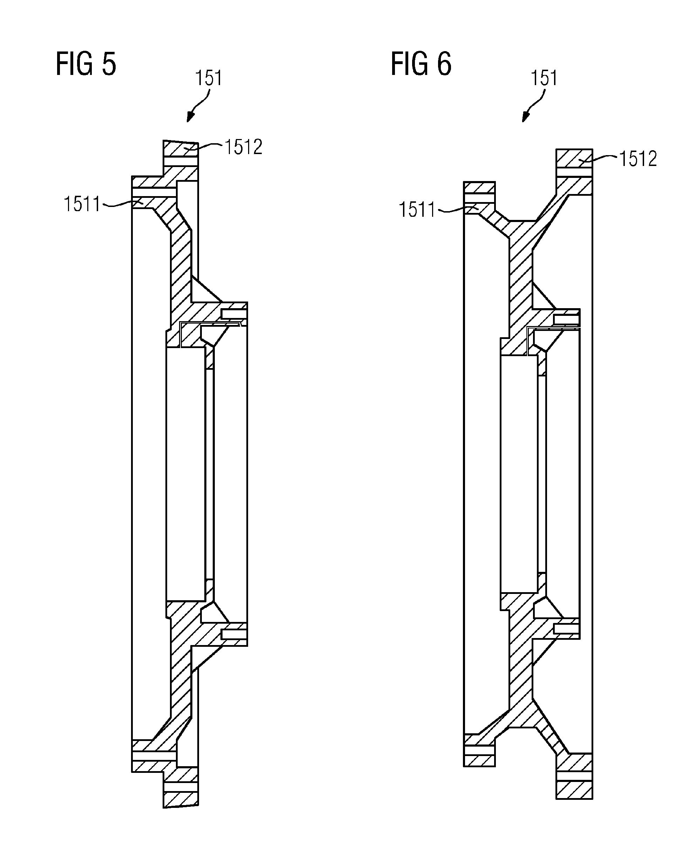

Entsprechend Figur 5 weist der Gehäusezwischenflansch 151 jeweils einen Flanschfortsatz 1511, 1512 auf, an dem der Statormantel 211 bzw. das Hohlrad 124 der zweiten Planetenradstufe 12 montiert ist. In Figur 6 ist eine Variante eines Gehäusezwischenflansches 151 dargestellt, bei welcher der dem Statormantel 211 zugeordnete Flanschfortsatz 1512 und der dem Hohlrad 124 zugeordnete Flanschfortsatz 1511 axial voneinander beabstandet sind.

Das Getriebegehäuse 15 weist eine vollkardanische umfangssymmetrische oder teilsymmetrische Aufhängung 13 zur Verbindung mit einem tragenden Strukturelement der Windkraftanlage aufweist. Dieses tragende Strukturelement ist beispielsweise ein Rahmen oder eine Gondel der Windkraftanlage.

Die zweite Planetenradstufe 12 ist hinsichtlich ihrer Übersetzung derart dimensioniert, daß sich bei Wahl einer durch 3 teilbaren Generatorpolzahl sowie bei optimaler Auslegung für Nenndrehzahl im wesentlichen identische Außendurchmesser von Stator der Generatoreinheit 2 und Hohlrad 124 der zweiten Planetenradstufe 12 ergeben. Generatorseitige Lager der Getriebeeinheit 1 sind elektrisch isolierend ausgeführt. Damit kann ein Stromfluß von der Getriebeeinheit 1 in einen Rotor der Generatoreinheit 2 vermieden werden.

Durch die vollkardanischen Aufhängung des Antriebssystems in Kombination mit einer Transversal- und Radialkraftfreiheit und einer Zweipunkt- bzw. Momentenlagerung des Antriebssystems entsteht ein Antriebstrang, der nur noch mit Torsion beaufschlagt wird. Durch ein gehäuseseitiges Zusammenfügen von Getriebeeinheit 1 und Generatoreinheit 2 unter Ausnutzung ihrer hohen Steifigkeit kann trotz deutlich weniger steifer Auflagerelemente in der kardanischen Aufhängung zumindest eine deutliche Reduktion von Zwangskräften im Antriebsstrang erzielt werden.

Durch Kombination der Zweipunkt- bzw. Momentenlagerung des Antriebssystems mit der vollkardanischen Aufhängung des auch die Generatoreinheit 2 umfassenden Getriebegehäuses 15 wird eine zwischen Getriebeeinheit 1 und Generatoreinheit 2 angeordnete Kupplung deutlich weniger belastet. Diese Kupplung kann daher erheblich steifer ausgeführt werden. Dies bietet wiederum weitere Vorteile in bezug auf Betriebsdynamik.

Eine Ausgestaltung der Hauptlager der Getriebeeinheit 1 kann weiterhin ohne Berücksichtigung von Auflagern nachfolgender Komponenten erfolgen. Dadurch wird ein Einsatz von Momentenlagern, die lediglich einen deutlich verringerten Bauraum benötigen, für die Hauptlager der Getriebeeinheit 1 in einer technisch beherrschbaren Form für Großantriebe möglich. Darüber hinaus ist eine torsionsbedingte Wellenflucht-Verdrillung erfindungsgemäß durch die vollkardanische Aufhängung für die Getriebeeinheit 1 schädigungsirrelevant geworden.

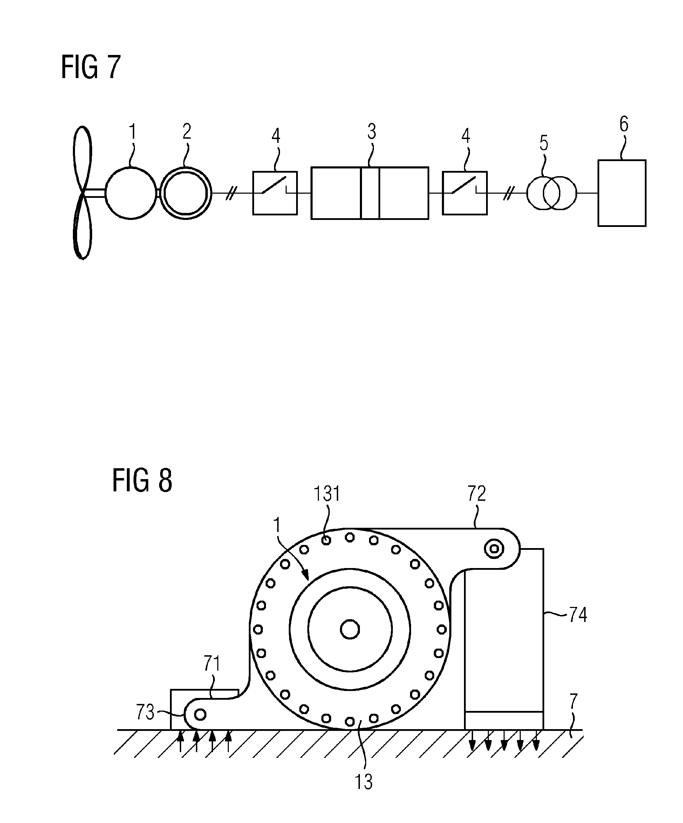

Die Generatoreinheit 2 weist im vorliegenden Ausführungsbeispiel 3 unabhängige Wicklungssysteme auf, die an einen in Figur 7 dargestellten Vollumrichter 3 angeschlossen sind. Der Vollumrichter 3 ermöglicht eine netzdynamische Entkopplung und ist über Lasttrennschalter 4 an die Generatoreinheit 2 einerseits sowie andererseits an einen Transformator 5 zur Leistungseinspeisung in ein Energieversorgungsnetz 6 angeschlossen. Darüber hinaus sind für jeden Pol getrennt isolierte Generatorwicklungen vorgesehen. Des weiteren sind die 3 unabhängigen Wicklungssysteme außerhalb des die Generatoreinheit 2 umgebenden Getriebegehäuses 15 verschaltet. Die Generatoreinheit ist 9- bis 30-polig ausgestaltet, bevorzugt 12- bis 24-polig.

Entsprechend dem in Figur 8 dargestellten Ausführungsbeispiel ist die vollkardanische Aufhängung 13 durch eine das Getriebegehäuse 15 vollumfänglich radial umgebende Ringstütze gebildet. Die Ringstütze 13 weist in Umfangsrichtung mehrere im wesentlichen äquidistant angeordnete Bohrungen 131 auf, in die elastische Bolzen mit jeweils einem ersten Endabschnitt eingesetzt sind. Die elastischen Bolzen sind mit einer korrespondierenden Drehmomentstütze am tragenden Strukturelement 7 der Windkraftanlage verbunden. Die korrespondierende Drehmomentstütze umfaßt ebenfalls ein Ringelement mit in Umfangsrichtung im wesentlichen äquidistant angeordneten Bohrungen, in welche die elastischen Bolzen mit einem zweiten Endabschnitt eingesetzt sind. Außerdem weist die korrespondierende Drehmomentstütze entsprechend dem in Figur 8 dargestellten Ausführungsbeispiel zwei asymmetrisch angeformte Stützarme 71, 72 auf, die jeweils mit einem Endabschnitt in eine Aufnahme 73, 74 am tragenden Strukturelement 7 eingesetzt und dort mit diesem verbunden sind.

Die elastischen Bolzen der vollkardanischen Aufhängung 13 sind axial demontierbare Elastomerbolzen. Auch der Kupplungsflansch 14 weist entsprechend Figur 1 in Umfangsrichtung mehrere im wesentlichen äquidistant angeordnete Bohrungen 141 auf, in die axial demontierbare Elastomerbolzen eingesetzt sind, die mit einem korrespondierenden Rotorwellenkupplungsflansch verbunden sind. Bei demontierten Elastomerbolzen der vollkardanischen Aufhängung 13 und des Kupplungsflansches 14 ist eine hinsichtlich einer Wellenanordnung der Getriebeeinheit 1 radiale Aus- bzw. Einbaurichtung des Antriebssystems freigegeben.

Zusatzaggregate der Getriebeeinheit 1, beispielsweise Ölanlage, Kühler und Hydraulik, sind vorteilhafterweise direkt am tragenden Strukturelement 7 der Windkraftanlage montiert. Über die vollkardanische Aufhängung 13 sowie eine elastische Kupplung zwischen Rotorwelle und Antriebswelle der Getriebe-einheit 1 sind die Zusatzaggregate damit vom Getriebegehäuse 15 entkoppelt.

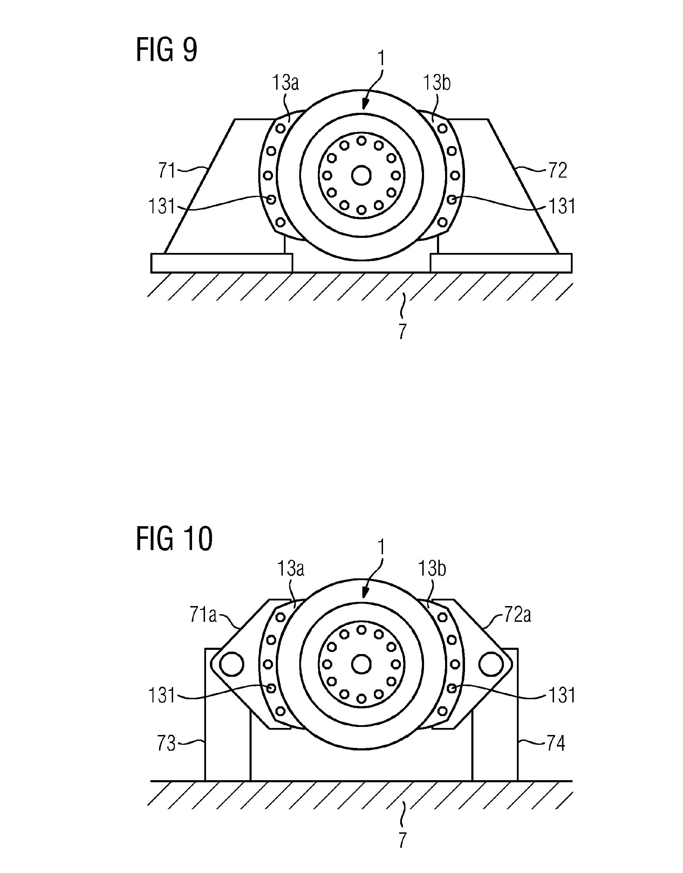

In Figur 9 und 10 sind jeweils zwei Ringsegmentstützen 13a, 13b zur teilumfänglichen vollkardanischen Aufhängung des Antriebssystems dargestellt. Die Ringsegmentstützen 13a, 13b weisen jeweils in Umfangsrichtung mehrere im wesentlichen äquidistant angeordnete Bohrungen 131 auf, in die elastische Bolzen eingesetzt sind. Zusätzlich sind die elastischen Bolzen mit korrespondierenden Drehmomentstützen 71, 72 am tragenden Strukturelement 7 der Windkraftanlage verbunden. Entsprechend dem in Figur 9 dargestellten Ausführungsbeispiel sind die korrespondierenden Drehmomentstützen 71, 72 direkt am tragenden Strukturelement 7 der Windkraftanlage befestigt. Dagegen umfassen die korrespondierende Drehmomentstützen entsprechend dem in Figur 10 dargestellten Ausführungsbeispiel jeweils einen Stützarm 71a, 72a, der mit einem Endabschnitt in eine Aufnahme 73, 74 am tragenden Strukturelement eingesetzt und dort mit diesem verbunden ist. Damit bleibt eine Einbaufähigkeit wie eine herkömmliche Zweiarmstütze erhalten, ohne daß hierzu eine Hauptrahmenanpassung an der Windkraftanlage erforderlich ist. Da eine Zwangskraftfreiheit bereits gegeben ist, können bekannte Elastomerauflager verwendet werden, die vorzugsweise vollständig entsprechend schwingungsdämpfenden Kriterien ausgelegt sind.

Sowohl bei dem in Figur 9 dargestellten Ausführungsbeispiel als auch bei dem in Figur 10 dargestellten Ausführungsbeispiel umfassen die korrespondierenden Drehmomentstützen am tragenden Strukturelement 7 jeweils ein Ringsegment mit in Umfangsrichtung im wesentlichen äquidistant angeordneten Bohrungen 131. In diesen Bohrungen 131 werden die elastischen Bolzen eingesetzt, die ebenso wie beim Ausführungsbeispiel entsprechend Figur 8 als axial demontierbare Elastomerbolzen ausgestaltet sein können. Vorzugsweise schneiden sich Symmetrieachse der Drehmomentstützen und Drehachse des Antriebssystems.

Darüber hinaus kann der Kupplungsflansch entsprechend einer weiteren Ausführungsform mehrere zueinander versetzte Bohrungsreihen aufweisen, in deren Bohrungen axial demontierbare Elastomerbolzen eingesetzt sind. Dadurch kann der Kupplungsflansch hinsichtlich seines Außendurchmessers bei gleichen Bohrungsabständen verkleinert ausgeführt werden.

Des weiteren können die Elastomerbolzen unterschiedliche, entsprechend Durchmesser und Flanschart angepaßte Steifigkeiten aufweisen. Insbesondere der Kupplungsflansch mit im Vergleich zur Aufhängung kleinerem Durchmesser kann aus härterem Material sein, während die Aufhängung aus weicherem Material gefertigt sein kann.

Die Verwendung des beschriebenen Antriebssystems ist nicht nur auf Windkraftanlagen beschränkt, sondern beispielsweise auch in Mühlenantriebssystemen denkbar, bei denen die Generatoreinheit durch eine Motoreinheit ersetzt wird.

## Patentansprüche

1. Antriebssystem für eine Windkraftanlage mit
~ einer zumindest eine Planetenradstufe (11, 12), die ein Hohlrad (114, 124), mehrere Planetenräder (113, 123), einen Planetenträger (112, 122) und ein Sonnenrad (111, 121) aufweist, umfassenden Getriebeeinheit (1),
~ einer der Getriebeeinheit (1) zugeordneten ersten Welle, die einen mit einer Arbeitsmaschinen- oder Rotorwelle verbindbaren Kupplungsflansch (14) aufweist und über den Planetenträger (112) gelagert ist,
~ einem die Getriebeeinheit (1) und eine mit einer zweiten Welle (16) der Getriebeeinheit (1) verbundene Motor- oder Generatoreinheit (2) umgebenden Getriebegehäuse (15),
~ einen drehfest mit einer Rotorhohlwelle (23) verbundenen Rotor (22) der Motor- oder Generatoreinheit (2),
~ einem motor- oder generatorseitigen Endabschnitt der zweiten Welle (16) der Getriebeeinheit (1), der von der Rotorhohlwelle (23) konzentrisch umgeben und mit dieser über eine innerhalb der Rotorhohlwelle (23) angeordnete Kupplung oder Spannverbindung (232) verbunden ist,
~ einen zwischen Getriebeeinheit (1) und Motor- oder Generatoreinheit (2) angeordneten Getriebegehäusestutzen (152), der einen getriebeseitigen Endabschnitt der Rotorhohlwelle (23) konzentrisch umgibt und einen Lagersitz für eine der Rotorhohlwelle zugeordnete Lageranordnung (231) bildet, mittels derer auch die zweite Welle (16) der Getriebeeinheit (1) gelagert ist.

2. Antriebssystem nach Anspruch 1,
bei dem die Rotorhohlwelle (23) mit der zweiten Welle (16) der Getriebeeinheit (1) durch eine Zahnkupplung mit Kurz-oder Bogenverzahnung verbunden ist.

3. Antriebssystem nach Anspruch 1,
bei dem die Rotorhohlwelle (23) mit der zweiten Welle (16) der Getriebeeinheit (1) durch einen Innenspannsatz (232) verbunden ist.

4. Antriebssystem nach Anspruch 3,
bei dem der Innenspannsatz (232) zumindest jeweils einen Außenring (2321) und einen Innenring (2322) umfaßt, die zueinander korrespondierende konische Kontaktflächen aufweisen und mittels mehrerer sich axial erstreckender Spannschrauben (2323) gegeneinander verspannbar sind.

5. Antriebssystem nach Anspruch 4,
bei dem durch Verspannung des zumindest einen Außenrings (2321) und des zumindest einen Innenrings (2322) sowohl die zweite Welle (16) der Getriebeeinheit (1) und die Rotorhohlwelle (23) als auch die Rotorhohlwelle (23) und Rotor (22) der Motor- oder Generatoreinheit (2) miteinander verbunden sind.

6. Antriebssystem nach Anspruch 5,
bei dem der Rotor der Motor- oder Generatoreinheit mittels einer Paßfederverbindung mit der Rotorhohlwelle verbunden ist, und bei dem die Paßfederverbindung axial auf den Innenspannsatz ausgerichtet ist.

7. Antriebssystem nach Anspruch 5,
bei dem durch Verspannung des zumindest einen Außenrings und des zumindest einen Innenrings sowohl die zweite Welle der Getriebeeinheit und die Rotorhohlwelle als auch die Rotorhohlwelle und der Rotor der Motor- oder Generatoreinheit kraftschlüssig miteinander verbunden sind.

8. Antriebssystem nach Anspruch 1,
bei dem die zweite Welle (16) der Getriebeeinheit (1) an ihrem motor- oder generatorseitigen Endabschnitt einen Flansch aufweist, bei dem die Rotorhohlwelle (23) mit der zweiten Welle (16) der Getriebeeinheit (1) durch einen Außenspannsatz verbunden ist.

9. Antriebssystem nach Anspruch 8,
bei dem der Rotor (22) der Motor- oder Generatoreinheit (2) an einen Flansch des Außenspannsatzes angeschraubt und über diesen mit der Rotorhohlwelle (23) verbunden ist.

10. Antriebssystem nach einem der Ansprüche 1 bis 9,
bei dem die Kupplung oder Spannverbindung (232) und der Rotor (22) der Motor- oder Generatoreinheit (2) axial aufeinander ausgerichtet sind und lediglich einen radialen Abstand zueinander aufweisen.

11. Antriebssystem nach Anspruch 10,
bei dem die zweite Welle der Getriebeeinheit axial im wesentlichen zur Hälfte von Rotorwohlwelle umgeben ist.

12. Antriebssystem nach einem der Ansprüche 10 oder 11,
bei dem die Lageranordnung (231) der Rotorhohlwelle (23) axial mittig zwischen der Kupplung oder Spannverbindung (232) und einem drehfest mit der zweiten Welle (16) der Getriebe-einheit (1) verbundenen Sonnenrad (121) angeordnet ist.

13. Antriebssystem nach einem der Ansprüche 1 bis 9,
bei dem die Kupplung oder Spannverbindung (232) axial zwischen dem Rotor (22) der Motor- oder Generatoreinheit (2) und der Lageranordnung (231) der Rotorhohlwelle (23) angeordnet ist.

14. Antriebssystem nach einem der Ansprüche 1 bis 13,
bei dem die Lageranordnung der Rotorhohlwelle am Getriebegehäusestutzen ein doppelreihiges Lager in X-Anordnung umfaßt.

15. Antriebssystem nach einem der Ansprüche 1 bis 14,
bei dem die Rotorhohlwelle (23) und die zweite Welle (16) der Getriebeeinheit (1) im wesentlichen ausschließlich mittels der Lageranordnung (231) am Getriebegehäusestutzen (152) gelagert sind.

16. Antriebssystem nach einem der Ansprüche 1 bis 14,
bei dem die Rotorhohlwelle einen in Richtung Getriebeeinheit stufenförmig wachsenden Außendurchmesser aufweist.

17. Antriebssystem nach einem der Ansprüche 1 bis 15,
bei dem der Getriebegehäusestutzen (152) an einen zwischen Getriebeeinheit (1) und Motor- oder Generatoreinheit (2) angeordneten Gehäusezwischenflansch (151) angeformt ist.

18. Antriebssystem nach Anspruch 17,
bei dem der Gehäusezwischenflansch (151) einen Lagersitz für ein motor- oder generatorseitiges Planetenträgerlager (126) aufweist.

19. Antriebssystem nach einem der Ansprüche 17 oder 18,
bei dem ein Statormantel (211) der Motor- oder Generatoreinheit (2) am Gehäusezwischenflansch (151) montiert ist.

20. Antriebssystem nach einem der Ansprüche 17 oder 18,
bei dem ein Hohlrad (124) einer motor- oder generatorseitigen Planetenradstufe (12) am Gehäusezwischenflansch (151) montiert ist.

21. Antriebssystem nach einem der Ansprüche 17 bis 19,
bei dem der Gehäusezwischenflansch (151) jeweils einen Flanschfortsatz (1511, 1512) aufweist, an dem jeweils ein Statormantel (211) der Motor- oder Generatoreinheit (2) oder ein Hohlrad (124) einer motor- oder generatorseitigen Planetenradstufe (12) montiert ist.

22. Antriebssystem nach Anspruch 21,
bei dem der dem Statormantel (211) zugeordnete Flanschfortsatz (1512) und der dem Hohlrad (124) zugeordnete Flanschfortsatz (1511) axial voneinander beabstandet sind.

23. Antriebssystem nach einem der Ansprüche 1 bis 22,
bei dem ein Außerdurchmesser eines mit der zweiten Welle (16) der Getriebeeinheit verbundenen Sonnenrads (121) kleiner ist als ein Innendurchmesser der Rotorhohlwelle (23).

24. Antriebssystem nach Anspruch 23,
bei dem die zweite Welle (16) der Getriebeeinheit (1) und die Rotorhohlwelle (23) durch eine Öffnung an einem von der Getriebeeinheit (1) abgewandt angeordneten Gehäusedeckel (153) und durch eine zur Rotorachse konzentrische Öffnung am Rotor (2) einsetzbar sind.

25. Antriebssystem nach einem der Ansprüche 1 bis 24,
bei dem die ersten Welle der Getriebeeinheit einen mit der Arbeitsmaschinen- oder Rotorwelle elastisch verbindbaren Kupplungsflansch (14) aufweist, und bei dem das Getriebegehäuse (15) eine kardanische umfangssymmetrische oder teilsymmetrische Aufhängung (13) zur Verbindung mit einem tragenden Strukturelement (7) der Windkraftanlage aufweist.

26. Antriebssystem nach Anspruch 25,
bei dem die kardanische Aufhängung durch eine das Getriebegehäuse (15) vollumfänglich radial umgebende Ringstütze (13) gebildet ist, die in Umfangsrichtung mehrere im wesentlichen äquidistant angeordnete Bohrungen (131) aufweist, in die elastische Bolzen eingesetzt sind, die mit einer korrespondierenden Drehmomentstütze am tragenden Strukturelement (7) der Windkraftanlage verbindbar sind.

27. Antriebssystem nach Anspruch 26,
bei dem die korrespondierende Drehmomentstütze ein Ringelement mit in Umfangsrichtung im wesentlichen äquidistant angeordneten Bohrungen umfaßt, in welche die elastischen Bolzen einsetzbar sind.

28. Antriebssystem nach Anspruch 27,
bei dem die korrespondierende Drehmomentstütze zwei symmetrisch oder asymmetrisch angeformte Stützarme (71, 72) umfaßt, die jeweils mit einem Endabschnitt in eine Aufnahme (73, 74) am tragenden Strukturelement (7) einsetzbar und dort mit diesem verbindbar sind.

29. Antriebssystem nach Anspruch 25,
bei dem die kardanische Aufhängung durch zwei das Getriebegehäuse teilumfänglich radial umgebende Ringssegmentstützen (13a, 13b) gebildet ist, die jeweils in Umfangsrichtung mehrere im wesentlichen äquidistant angeordnete Bohrungen (131) aufweisen, in die elastische Bolzen eingesetzt sind, die mit korrespondierenden Drehmomentstützen am tragenden Strukturelement (7) der Windkraftanlage verbindbar sind.

30. Antriebssystem nach Anspruch 29,
bei dem die korrespondierenden Drehmomentstützen jeweils ein Ringsegment (13a, 13b) mit in Umfangsrichtung im wesentlichen äquidistant angeordneten Bohrungen (131) umfassen, in welche die elastischen Bolzen einsetzbar sind.

31. Antriebssystem nach Anspruch 30,
bei dem die korrespondierende Drehmomentstützen jeweils einen Stützarm (71, 72) umfassen, der mit einem Endabschnitt in eine Aufnahme (73, 74) am tragenden Strukturelement (7) einsetzbar und dort mit diesem verbindbar ist.

32. Antriebssystem nach einem der Ansprüche 26 bis 31,
bei dem die elastischen Bolzen der kardanischen Aufhängung axial demontierbare Elastomerbolzen sind, und bei dem der Kupplungsflansch in Umfangsrichtung mehrere im wesentlichen äquidistant angeordnete Bohrungen aufweist, in die axial demontierbare Elastomerbolzen eingesetzt sind, die mit einem korrespondierenden Arbeitsmaschinen- oder Rotorwellenkupplungsflansch verbindbar sind.

33. Antriebssystem nach Anspruch 32,
bei dem bei demontierten Elastomerbolzen der kardanischen Aufhängung und des Kupplungsflansches eine hinsichtlich einer Wellenanordnung der Getriebeeinheit radiale Aus- und/oder Einbaurichtung des Antriebssystems freigegeben ist.

34. Antriebssystem nach einem der Ansprüche 25 bis 33,
bei dem Zusatzaggregate der Getriebeeinheit direkt am tragenden Strukturelement der Windkraftanlage montiert und über die kardanische Aufhängung sowie eine elastische Kupplung zwischen Arbeitsmaschinen- oder Rotorwelle und der ersten Welle der Getriebeeinheit vom Getriebegehäuse entkoppelt sind.

35. Antriebssystem nach einem der Ansprüche 25 bis 34,
bei dem die Getriebeeinheit (1) ein erstes (115) und ein zweites Hauptlager (116) umfaßt, mittels derer die erste Welle der Getriebeeinheit gelagert ist, und die zwischen Planetenträgerwangen und Getriebegehäuse (15) angeordnet sind.

36. Antriebssystem nach einem der Ansprüche 25 bis 35,
bei dem die Getriebeeinheit (1) eine erste (11) und zweite Planetenradstufe (12) in koaxialer Bauform umfaßt.

37. Antriebssystem nach einem der Ansprüche 1 bis 36,
bei dem mit der Rotorhohlwelle (23) eine Bremsscheibe (233) drehfest verbunden ist.

38. Antriebssystem nach Anspruch 37,
bei dem die Bremsscheibe an einer von der Getriebeeinheit abgewandten Stirnseite der Motor- oder Generatoreinheit angeordnet ist.

39. Antriebssystem nach einem der Ansprüche 1 bis 38,
bei dem motor- oder generatorseitige Lager der Getriebeeinheit elektrisch isolierend ausgeführt sind.

40. Antriebssystem nach einem der Ansprüche 1 bis 39,
bei dem die Getriebeeinheit mit einer Generatoreinheit verbunden ist, und bei dem die erste Welle der Getriebeeinheit eine getriebeseitige Antriebswelle ist, und bei dem die zweite Welle der Generatoreinheit eine getriebeseitige Abtriebswelle, und bei dem der Kupplungsflansch der getriebeseitigen Antriebswelle mit einer Rotorwelle verbindbar ist.
